Europäisches Patentamt

European Patent Office

Office européen des brevets

(19)

(11) Numéro de publication: **0 084 989**
A2

# DEMANDE DE BREVET EUROPEEN

(12)

(21) Numéro de dépôt: 83400063.0

(22) Date de dépôt: **12.01.83**

(51) Int. Cl.³: **G 01 N 29/04**

(30) Priorité: **22.01.82 FR 8200953**

(43) Date de publication de la demande: **03.08.83**
**Bulletin 83/31**

(84) Etats contractants désignés: **BE DE GB IT LU NL SE**

(71) Demandeur: **CENTRE TECHNIQUE DES INDUSTRIES MECANIQUES, 52, avenue Félix-Louat B.P. 67, F-60304 Senlis Cédex (FR)**

(72) Inventeur: **Brand, Alain, 8, rue Molière, F-42100 Saint-Etienne (FR)**
Inventeur: **Sorel, Michel, 22, Allée des Peupliers, F-42330 Saint-Galmier (FR)**

(74) Mandataire: **Fedit, René et al, S.A. FEDIT-LORIOT 38 avenue Hoche, F-75008 Paris (FR)**

(54) **Procédé de fabrication de défauts étalons plans noyés dans la masse d'une pièce métallique et pièces de référence pour examens non destructeurs réalisés suivant ce procédé.**

(57) L'invention concerne la réalisation de pièces de référence présentant des défauts étalons plans noyés dans la masse.

On usine dans une face de deux tronçons de cylindre droit identiques (1, 2) une empreinte (3, 4) à contour fermé et fond concave de géométrie prédéterminée. On superpose les faces usinées et on les assemble en un bloc par leur périphérie (5) avant d'écraser le bloc jusqu'à aplatissement des fonds concaves.

Application à la réalisation d'étalons de defauts plans détectibles par examen non destructeur.

Procédé de fabrication de défauts étalons plans noyés
dans la masse d'une pièce métallique et pièces de
référence pour examens non destructeurs réalisés
suivant ce procédé.

La présente invention concerne un procédé de
fabrication de pièces comportant des défauts étalons
pouvant servir de référence pour des examens non destructeurs de pièces de fabrication.

On peut rencontrer une très grande variété de
défauts naturels dans les pièces mécaniques. Ces défauts peuvent provenir du mode de fabrication (forge,
laminage, soudage, etc.) ou apparaître et se développer lors du fonctionnement normal (fissures de fatigue).

Les ultrasons permettent de mettre en évidence les défauts, mais il est nécessaire d'en déterminer
la forme, l'orientation et, par suite, leur nocivité.
Pour déterminer la forme et l'orientation des défauts,
il est nécessaire de disposer d'étalons de référence
pour mesurer les défauts.

Les étalons étaient jusqu'ici réalisés par
perçage à différentes profondeurs de trous à fond
plat et faible diamètre dans des blocs massifs. Cependant, ces étalons classiques ne sont guère représentatifs de la réalité et ne constituent pas des étalons
fiables.

L'invention a pour but la réalisation d'étalons reproduisant pratiquement à l'identique les défauts que l'on rencontre habituellement dans les pièces de fabrication.

L'invention a pour objet un procédé de fabrication de pièces en métal massif présentant au moins un défaut étalon plan noyé dans la masse, servant de référence pour des examens non destructeurs, notamment par ultrasons, caractérisé en ce qu'on prépare deux tronçons de cylindre droit identiques dudit métal, on usine dans une face de chaque tronçon au moins une empreinte symétrique à contour fermé et fond concave de géométrie prédéterminée, on rectifie et dégraisse les deux faces usinées, on superpose les deux tronçons par leurs faces usinées pour former un bloc, on assemble les deux tronçons par la périphérie des deux faces usinées superposées, et on écrase le bloc perpendiculairement au plan des faces assemblées, au moins jusqu'à ce que les fonds concaves des empreintes en vis-à-vis soient aplatis et viennent en contact l'un avec l'autre.

Suivant un mode de mise en oeuvre particulièrement intéressant, on prélève les tronçons dans une barre filée en acier fin au carbone, on les assemble après usinage en un bloc par un cordon de soudure, et on chauffe le bloc à environ 1150°C avant écrasement.

Plus particulièrement, on peut préparer des tronçons d'environ 80 mm de diamètre et 50 mm de long, dans lesquels on usine des empreintes de 20 mm environ de diamètre et 1,2 à 4 mm environ de flèche chacune, et on écrase le bloc par forgeage jusqu'à un taux d'écrasement effectif de 0,78 environ.

L'invention a également pour objet des pièces métalliques de référence de défauts plans noyés dans la masse, pour examens non destructeurs, fabriquées suivant un tel procédé, et plus particulièrement, des pièces présentant des défauts de planéité, diamètre et orientation identiques.

L'invention sera mieux comprise à la lecture de la description détaillée qui va suivre et à l'examen du dessin annexé qui représente, à titre non limitatif, un mode de réalisation de l'invention. Sur ce dessin :

la figure 1 représente un bloc réalisé suivant l'invention, avant écrasement, et

la figure 2 représente une pièce métallique de référence suivant l'invention, obtenue par écrasement du bloc de la figure 1.

A titre d'exemple, pour préparer des pièces métalliques de référence de défauts plans noyés dans la masse suivant l'invention, on prélève dans des barres rondes filées de 80 mm de diamètre en acier fin au carbone des cylindres de 50 mm de hauteur chacun.

Sur une des bases de chaque cylindre, on usine, en commande numérique, une empreinte de 20 mm de diamètre à fond sphérique et de 2 mm de flèche.

On contrôle chaque empreinte par réplique au projecteur de profil pour vérifier la reproductibilité de l'usinage. Les variations relatives de flèche et de diamètre sont respectivement égales à 2,5 % et 1,5 %.

Les faces présentant les empreintes sont ensuite rectifiées, soigneusement dégraissées, mises en regard, immobilisées et protégées d'une oxydation ultérieure par un cordon de soudure circulaire au droit du plan de joint. On porte ensuite les blocs ainsi réalisés à 1150°C $\pm$ 50°C et on les forge sur une presse de 300 tonnes jusqu'à un taux d'écrasement effectif de 0,78.

Le contrôle par ultrasons des pièces de référence ainsi réalisées montre, quel que soit le type de sonde (2,25 à 10 Hz avec ou sans focalisation) et la méthode utilisée (palpage direct ou immersion), que l'écho du plan de joint n'est pas visible et est noyé dans le bruit de structure.

Un contrôle des blocs en immersion réalisé à l'aide d'une sonde focalisée analysé en mode C permet de visualiser les défauts et d'en mesurer les contours. Pour des blocs réalisés, comme ci-dessus avec une flèche de 2 mm, on mesure sur enregistrement cartographique un diamètre moyen de 10 mm avec un écart type de 1 mm.

Pour examiner le défaut ainsi réalisé dans les pièces massives, on pratique une coupe axiale dans des blocs afin de permettre des examens magnétoscopiques, macrographiques et micrographiques dont certains après recuit à 850°C pendant deux heures.

En examen magnétoscopique, les défauts apparaissent très discontinus, par suite d'une recristallisation partielle des faces des empreintes. Tous les défauts sont rigoureusement plans.

L'attaque macrographique permet de visualiser nettement la déformation générale du plan en forme de tonneau, mais surtout une forte déformée locale des fibres en extrémité de défaut.

Pour mieux caractériser des défauts réalisés, on tourne un certain nombre de blocs axialement en commande numérique de manière à placer le défaut dans la partie centrale d'éprouvettes à corps cylindriques de 20 mm de diamètre, c'est-à-dire le diamètre originel de l'empreinte. Ces éprouvettes, soumises à des essais de traction statique et de fatigue, montrent que la recristallisation du joint est telle que ses caractéristiques statiques sont pratiquement équivalentes (à 6 % près) aux caractéristiques du métal de base.

L'examen microscopique des ruptures en traction statique montre que les éprouvettes présentent trois zones distinctes :

- une zone centrale où les stries concentriques d'usinage sont bien visibles. La structure observée est un mélange de ferrite et de perlite, les deux faces du défaut étant pratiquement en contact et présentant un liséré ferritique continu.

- Une zone intermédiaire où les stries d'usinage sont comme sous-jacentes et où la rupture est mate à grains fins, le liséré ferritique devenant discontinu.

- Enfin, une zone périphérique dans laquelle seules quelques plages de ferrite alignées permettent de situer la position de l'ancien joint. Un recuit affinant le grain fait disparaître totalement ces traces.

Les contrôles et mesures ainsi réalisés montrent que la réalisation de défauts noyés dans la masse ayant une planéité parfaite est réalisable de façon économique et reproductible.

On peut réaliser, de la même façon, des défauts elliptiques ou autres, et non pas circulaires, comme décrit dans l'exemple ci-dessus.

La réalisation de défauts de diverses dimensions permet la constitution d'abaque pour la définition de la dimension originelle de l'empreinte nécessaire pour obtenir un défaut de dimension donnée.

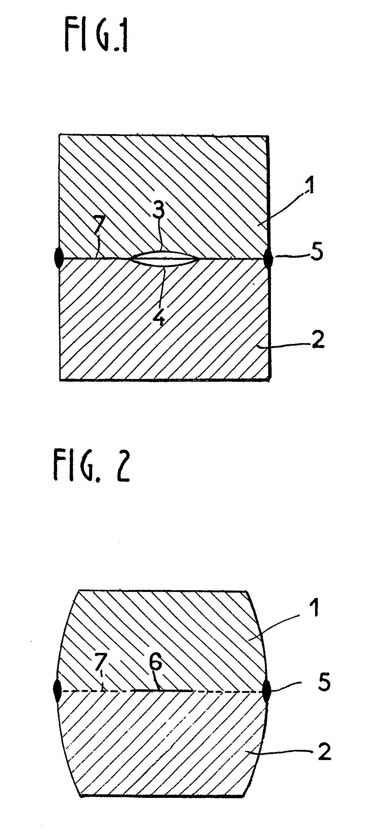

Le bloc représenté à titre d'illustration sur les figures 1 et 2 est constitué initialement de deux cylindres identiques 1 et 2 assemblés par un cordon de soudure 5. Deux empreintes à fond sphérique 3 et 4 identiques et affrontées ménagent entre les deux

0084989

blocs un vide lenticulaire.

Après écrasement par forgeage, le bloc prend la forme en tonneau représentée sur la figure 2. Le plan du joint 7 représenté par une ligne discontinue est pratiquement inexistant, tandis qu'il s'est formé un défaut plan 6 à l'emplacement des empreintes 3 et 4.

Bien entendu, l'invention n'est nullement limitée au mode de réalisation décrit et représenté, elle est susceptible de nombreuses variantes accessibles à l'homme de l'art, suivant les applications envisagées et sans s'écarter pour autant du cadre de l'invention.

C'est ainsi que l'invention a été décrite par rapport à des pièces rondes en métal ferreux dans lesquelles en pratique des empreintes sphériques de 20 mm de diamètre. Il est cependant bien évident qu'on peut réaliser des pièces analogues dans n'importe quel matériau compressible, avec des empreintes de dimensions et de formes différentes dans des pièces cylindriques de section droite non circulaire, par exemple ovoïde ou polygonale.

REVENDICATIONS

1. Procédé de fabrication de pièces en métal massif présentant au moins un défaut étalon plan noyé dans la masse, servant de référence pour des examens non destructeurs, notamment par ultrasons, caractérisé en ce qu'on prépare deux tronçons de cylindre droit (1, 2) identiques dudit métal, on usine dans une face de chaque tronçon au moins une empreinte symétrique (3, 4) à contour fermé et fond concave de géométrie prédéterminée, on rectifie et dégraisse les deux faces usinées, on superpose les deux tronçons par leurs faces usinées pour former un bloc, on assemble les deux tronçons par la périphérie (5) des deux faces usinées superposées, et on écrase le bloc perpendiculairement au plan des faces assemblées au moins jusqu'à ce que les fonds concaves des empreintes en vis-à-vis soient aplatis et viennent en contact l'un avec l'autre.

2. Procédé selon la revendication 1, caractérisé en ce qu'on prélève les tronçons dans une barre filée en acier fin au carbone, on les assemble après usinage en un bloc par un cordon de soudure, et on chauffe le bloc à environ 1150°C avant écrasement.

3. Procédé selon la revendication 1 ou 2, caractérisé en ce qu'on prépare des tronçons d'environ 80 mm de diamètre et 50 mm de long, on usine des

2

0084989

empreintes de 20 mm environ de diamètre et de 1,2 à 4 mm environ de flèche chacune, et on écrase le bloc par forgeage jusqu'à un taux d'écrasement effectif de 0,78 environ.

4. Pièces métalliques de référence de défauts plans noyés dans la masse pour examens non destructeurs, caractérisées en ce qu'elles sont réalisées suivant le procédé de l'une des revendications 1 à 3.

5. Pièces suivant la revendication 4, caractérisées en ce qu'elles présentent des défauts de planéité, diamètre et orientation identiques.

0084989

FIG.1

FIG. 2